# EUROPEAN PATENT APPLICATION

(11) **EP 2 282 265 A1**
(43) Date of publication of application: **09.02.2011**
(21) Application number: 09166519.0
(22) Date of filing: 27.07.2009
(51) Int. Cl.: G06F 9/48

(54) **A hardware task scheduler**

(71) Applicant: NXP B.V., 5656 AG Eindhoven (NL)
(72) Inventor: Al-Kadi, Ghiath, Redhill, Surrey RH1 1DL (GB); Duranton, Marc, Redhill, Surrey RH1 1DL (GB)
(74) Representative: Williamson, Paul Lewis

(57) **Abstract**

A hardware task scheduler (200) for scheduling processing resources of a plurality of processing elements (110, 120), the processing elements (110, 120) being adapted to execute tasks with a regular dependency pattern, the hardware task scheduler (200) comprising: a control unit (210) being configured to assign the tasks, based on their readiness for execution, to the processing elements (110, 120) in accordance with the regular dependency pattern, and a power management unit (295) configured to determine a stage of the execution of tasks and to apply a power saving mode to one of the processing elements (110, 210), the applied power saving mode being based on the stage of the execution of tasks and on the readiness of tasks for the execution.

## Description

### FIELD OF THE INVENTION

The invention relates to a hardware task scheduler for scheduling processing tasks to a plurality of processing elements.

Furthermore, the invention relates to a multiprocessing system.

Moreover, the invention relates to a hardware-based power saving method for a plurality of processing elements.

### BACKGROUND OF THE INVENTION

Power consumption gradually becomes a major problem in a silicon-based design of multiprocessing systems. In this context, dynamic power saving methods and static power saving methods have been used for power saving.

Dynamic power saving is based on a dynamic scheduling. That means that a processor core dynamically disables a part or parts of its functional units during runtime. However, this method has a drawback, since a powering down/up has a setup time that can grow to thousands of cycles. Hence, it may happen that, due to the dynamical scheduling, a wake-up of the processor core could be activated immediately after the processor core has been disabled. Therefore, performance of the processor core and/or its functional units may be decreased, which may result also in a decreased power saving.

Most of the current available solutions to the power saving problem are based on a software routine that requests a power management system to enable the power saving. Further, the corresponding power saving schedules are often created in a static and/or a manual fashion, which is error prone. Furthermore, if the used application has strong data dependencies in the flow (for instance, for video encoding/decoding) the static scheduling may not be not sufficient.

Moreover, neither the dynamic power saving methods nor the static power saving methods do provide an accurate prediction of the power consumption. These methods also do not provide a correct selection of a power saving scheme (for instance, a clock gating of a particular core/coprocessor or switching-off of subsystems of the corresponding system on chip (SoC)).

### OBJECT AND SUMMARY OF THE INVENTION

It is an object of the invention to provide for a hardware task scheduler with an improved power saving efficiency.

In order to achieve the object defined above, a hardware task scheduler, a multiprocessing system, and a hardware-based power saving method are provided.

According to an example embodiment of the invention, a hardware task scheduler for scheduling processing resources of a plurality of processing elements (such as processor cores, coprocessors, for instance, physical cores/coprocessors, and/or hardware threads) is provided. The processing elements are adapted to execute tasks (for instance, hardware tasks, software tasks and/or hybrid tasks) with a regular dependency pattern (such as, for instance, a repetitive dependency pattern). The hardware task scheduler comprises a control unit being configured to assign the tasks, based on their readiness for execution, to the processing elements in accordance with the regular dependency pattern. The hardware task scheduler also comprises a power management unit configured to determine a stage of the execution (i.e., the stage representing the progress of execution) of tasks and to apply a power saving mode to one (or several) of the processing elements, the applied power saving mode being based on the stage of the execution of tasks and on the readiness of tasks for the execution.

According to another example embodiment of the invention, a multiprocessing system is provided. The multiprocessing system comprises a plurality of processing elements, the processing elements being adapted to execute tasks with a regular dependency pattern, and a hardware task scheduler having the above mentioned features and coupled to the plurality of processing elements.

According to still another example embodiment of the invention, a hardware-based power saving method for a plurality of processing elements, the processing elements executing tasks with a regular dependency pattern, the tasks being assigned to the processing elements based on their readiness for execution and in accordance with the regular dependency pattern, is provided. The power saving method comprises determining a stage of the execution of tasks, and applying a power saving mode to one of the processing elements, the applied power saving mode being based on the stage of the execution of tasks and on the readiness of tasks for the execution.

The term "hardware task scheduler" may particularly denote a task scheduler for a task management in hardware. In general, a task scheduler (also referred to as a dispatcher) may be a part of an operating system used for sharing available processing resources between tasks in a multitasking system. Hence, the hardware task scheduler may be used for a scheduling (also referred to as a dispatching) of tasks. The hardware task scheduler may, for instance, to manage a list of active processes (for instance, tasks being ready to be executed). In general, the scheduling may be based on various criteria such as, for instance, importance of individual tasks. The tasks may be supplied to a processing element as quickly as within few microseconds or milliseconds.

The term "processing element" may particularly denote a processor core or a coprocessor. The processor core or the coprocessor may be a single-threaded or a multi-threaded one. The threads may be implemented in software (software threads) or in hardware (hardware threads) or in both hardware and software (hybrid tasks). The plurality of the processing elements may comprise single-threaded as well as multi-treaded processing elements. Hence here, the term "processing element" may also denote a hardware thread. Further, the processing element may also particularly denote a virtual processing element (for instance, a virtual processor or a virtual coprocessor).

The plurality of the processing elements may particularly be a homogeneous plurality of processing elements or a heterogeneous plurality of processing elements (referred to as a hybrid plurality of processing elements).

The term "homogeneous plurality of processing elements" may particularly denote any plurality of processing elements of one type. For instance, a multi-core processor may be an example of a homogeneous plurality of processing elements. Another example of a homogeneous plurality of processing elements may be a multi-coprocessor.

The term "heterogeneous plurality of processing elements" or "hybrid plurality of processing elements" may particularly denote any plurality of processing elements (such as, for instance, a master processor core, slave processor core, a coprocessor and/or a hardware thread) which can be used in course of a heterogeneous computing (also referred to as a hybrid computing). In contrary to a homogenous plurality of processing elements, the heterogeneous plurality may, for instance, comprise both processor cores and coprocessors, wherein the employed processor cores may be similar or different to the employed coprocessor.

In general, the term "heterogeneous computing" or "hybrid computing" may particularly denote any strategy of deploying multiple types of processing elements within a single workflow, and allowing each processing element to perform tasks (for instance software tasks, hardware tasks and/or hybrid tasks) to which it is best suited.

The term "task" may particularly denote an execution path through an address space (for instance a set of instructions that are loaded in memory). A task may be, for instance, a software task, which may be executed by a program running on a processing element (for instance a processor core). A task may also be, for instance a hardware task, which may be executed by a hardware elements such as a coprocessor. A hybrid task may be executed by a program and/or a hardware element. In a multi-threaded processing element the tasks (for instance software, hardware tasks and/or hybrid tasks) may also be executed by hardware threads. A task may be understood as being, a real-time application.

Execution of tasks may be a part of an application (for instance a video, graphics, modem application, etc.). In applications (for instance, video encoding and/or decoding) which may exceed a performance power of a processing element (for instance, a compute power of a processor core) the application may be split and run on several processing elements. For this, tasks may be created, scheduled in time, mapped (i.e., assigned) to proper processing elements and synchronized. The tasks may be parallelized imposing a regular dependency pattern between the tasks (for simplicity referred to as a task dependency or a dependency of tasks in the sequel). That means, for instance, that a task (for instance a child task, also referred to as a candidate tasks) may start after one or more other tasks (parent tasks) have been finished. Applications with such task dependency may be based on an intertask dependency graph or graphs (for simplicity also referred to as a dependency graph in the sequel).

The term "regular dependency pattern" or "regular dependency", when referring to tasks, may particularly denote any dependency of tasks exhibiting at least some degree of regularity. For instance there may be one or more rules (for instance recursive, or repetitive rules) relating a child task to one or more parents tasks, the same rule or rules applying to, for instance to all tasks characterized in a particular way. Particularly, the regular dependency may be a repetitive dependency, such that the same dependency rules apply to all children tasks (may be with a possible exception of tasks on a boundary or boundaries of the corresponding dependency graph) and the same dependency rules as between children tasks and parent tasks apply to parent tasks in relation to the grand parent tasks (again may be with a possible exception of tasks being on a boundary or boundaries of the corresponding dependency graph). In general, duplicate tasks may be generated for a task depending on several other tasks. The regular dependency pattern may be referred, for simplicity, to as a "dependency pattern" in the sequel.

The term "readiness" of a task may particularly denote a status of a task, such as a pending task status (for instance a task which may be ready for execution and waiting for being executed by one of the processing elements) or unprocessed task status (for instance task status for which no duplicate has been promoted to the pending status). Further, the readiness of a task may also refer to whether the parent tasks have already been executed or not.

The term "stage of the execution of tasks" may particularly denote a particular phase during the execution of tasks characterized by the progress of the execution. Particularly, the stage of the execution of tasks may depend on the time elapsed from a starting time point of the execution of tasks.

The term "power saving mode" may particularly denote an operation mode of the processing element characterized by a degree of the power saving in this operation mode. The degree of power saving may depend on power consuming sub-elements (for instance, their number and/or kind) of the processing element, which sub-elements of the processing element circuitry are fully or partially disabled in the corresponding power saving mode. The degree of the power saving may also depend on a technique applied in order to fully or partially disable the corresponding sub-elements of the processing element circuitry.

Hence, the power management may determine the stage of the execution of tasks (by choosing the pending task to be promoted to execution) and may chose and apply a most appropriate power saving mode to this particular processing element, depending on the stage of the execution of tasks and on the readiness (for instance, on availability and/or the status) of tasks, which tasks possibly might be or might become to be assigned to a particular processing element.

Hence, the hardware task scheduler allows for an effective and optimized power saving, which power saving may take into account also the dependency between tasks. This in particular means that the hardware task scheduler, in particular its power management unit, may select, based on the stage of the execution of tasks, a proper power saving mode and the proper power saving mode may be applied (for instance triggered) to a particular processing element at the right moment, if required. In course of that, the hardware tasks scheduler, particularly the power saving unit may also take into account the information about tasks being ready to be executed and their assignation to the processing elements in order to decrease the global power consumption for the complete processing. Therefore, the loss of cycles due to power saving may be reduced and the power saving efficiency may be increased using a purely hardware-based system.

Next, further example embodiments of the hardware task scheduler will be explained. However, these embodiments also apply to a multiprocessing system and a hardware-based power saving method for a plurality of processing elements.

According to an example embodiment of the invention, the power management unit is adapted to determine the stage of execution of tasks based on a number of tasks being ready for execution and based on the number of processing elements.

Hence, for instance, a relation between the number of tasks being ready for execution and the number of processing elements (for instances processor cores, coprocessors, hardware threads, etc.) may be used advantageously as an information, based on which the stage of the execution of tasks may be determined. The number of tasks being ready for execution and its relation to the number of processing elements may indicate a particular phase during the execution of tasks, which phase may be characterized, for instance, by the progress of the execution of tasks. Particularly, the number of tasks being ready for execution and its relation to the number of processing elements may indicate at least partially the time elapsed from a starting time point of the execution of tasks. Hence, the relation between the number of tasks being ready for execution and the number of processing elements may represent an effective criterion for determining the stage of execution of tasks.

According to an example embodiment of the invention, the stage of the execution of tasks comprises one of the group consisting of an initial stage, in which the number of tasks ready for execution increases from one to a number which is equal to the number of processing elements, an intermediate stage, in which the number of tasks ready for execution exceeds the number which is equal to the number of processing elements, and a final stage, in which the number of tasks ready for execution decreases from the number which is equal to the number of processing elements to one.

At the beginning of the corresponding application (i.e., the application comprising the tasks to be executed by the processing elements), the processing elements (for instance the master processor core, the slave processor cores, the coprocessors and/or hardware threads) are waiting for the tasks being ready for execution. Gradually, as the tasks become ready for execution, more and more processing elements will be deployed until all processing elements become deployed and the intermediate stage starts. During the intermediate stage all processing elements become deployed. At some point the number of tasks that are waiting to be executed will become again less then the number of the processing element. At this point, the final stage starts. Since the final stage, intermediate stage and the final stage represent quite different phases of the execution of the tasks, the particular processing elements may require different respective operation modes in the respective different stages. Hence, it may also be advantageous to adjust the power saving modes to the three above mention stages of the execution of tasks.

According to an example embodiment of the invention, the control unit is further configured to assign tasks to the processing elements, based on one of the group consisting of a load balancing and a data locality.

The term "data" may particularly denote the data that are different from a code and/or instructions (i.e., program data). Hence retaining data may denote retaining data that are different from the code and/or instructions.

The term "data locality" may particularly refer to a data locality policy. The implemented data locality policy may prefer, for instance, a task to be assigned to run (i.e., be executed) on a processing element where his predecessor task (i.e., parent task) has been finished. Hence, the data (i.e., data that are different from the code and/or instructions) used by processing elements in executing parent tasks may advantageously be used in executing children tasks. Here, in accordance with the above explained meaning of the term "data" the terms "data locality" and "data locality policy" may also refer also to "program locality" and "program locality policy", respectively. The program locality may also be referred to as a code locality, according to which a later task, which has the same code as the currently executed task, may be assigned to the same processing element.

The term "load balancing" may particularly refer to a load balancing policy. The implemented load balancing policy (i.e., load balancing method) may prefer, for instance, a task to be assigned to run on a processing elements, which processing element is executing a lesser number of tasks and/or to which a lesser number of other tasks has been assigned at the at the time of assigning the task. Hence, a parallel throughput of the application may be maximized, due to the load balancing.

Using the data locality policy and/or the load balancing policy the bandwidth use and/or the performance of the processing elements may be increased. Correspondingly, due to the data locality, the data used by the processing element for executing tasks can be used with a maximal efficiency, since, for instance, the data used for executing a parent task and data used for executing its child task may be at least partially identical.

According to an example embodiment of the invention, the control unit is further configured to perform one of the group consisting of assigning tasks to the processing elements based on the load balancing during the initial stage and the final stage, and assigning tasks to the processing elements based on the data locality during the intermediate stage.

Hence, a join principle may be defined of assigning tasks to the processing elements based on the load balancing during the initial stage and the final stage, and assigning tasks to the processing elements based on the data locality during the intermediate. This may be advantageous because the implemented data locality and load balancing may in some cases suggest contradicting task scheduling options (assignment options). For example, according to the data locality method a task may be assigned to run (i.e., to be executed) on a processing element where the parent task has been finished. However, it may happen that this processing element is overloaded (for instance, in case that the processing element is multi-threaded and/or virtualized, in which case other tasks may be assigned to virtual processing elements physically mapped to the processing element, in addition to task currently running on it) and hence, the load balancing method may recommend running the task on some other processing element. Therefore, the above described joint principle may be defined in order to choose the most beneficial method for each task scheduling (i.e., for the assignment of a task in the initial stage and the final stage the load balancing method and for the assignment of a task in the intermediate stage the data locality method may be chosen). For instance, in contrary to the initial stage and the final stage, in the intermediate stage the control unit may find enough parallelism to assign tasks based on data locality policy. In heterogeneous architectures the joint principle may also be aware of performance implications of multi-threading types (for instance, interleaved and blocked types). However, an interleaved multi-threaded processing element may run (i.e., execute) a single task slower than a single-threaded processing element. Therefore, under other conditions being equal, if there is a choice between two processing elements with different numbers of interleaved threads, the scheduling policy (i.e. the assigning of tasks to processing elements) may favor the processing element with fewer interleaved threads.

According to an example embodiment of the invention, the power saving mode comprises one of the group consisting a short sleep mode comprising a partial clock gating of the one of the processing elements, a median time sleep mode comprising a full clock gating of the one of the processing elements, and a deep sleep mode comprising switching-offthe one of the processing elements.

It may be advantageous to apply the three above mentioned power saving modes in order to achieve a reduced overhead (the overhead being associated with put to sleep and/or wake up) related to different parts of the processing elements. For instance, with these three power saving modes the overhead related to program and/or functional units as well as registers and/or local storages (for instance, caches, memories, etc.) may be reduced. During the short sleep mode the power saving may be minimal, as compared to the median time sleep mode and/or the deep sleep mode, but the time to go and to recover from this power saving mode may also be minimal. For instance, the processing element may restart from the short sleep mode within only few cycles (for instance, between one cycle and several tenths of cycles, depending on the architecture, which may be, for instance, a pipelined one, etc). During the median sleep mode the power saving may be better that during the short sleep mode, but the time needed to restart the processing element may be longer. During the deep sleep mode the power saving may be maximal. However, the time needed to restart the processing element may also be the maximal one (for instance, as much as between several hundreds and several thousands of cycles, if it is required to recover register data and caches, which may have been stored to external memories).

In general, the term "clock gating" may particularly denote a power-saving technique based on additional logic added to a circuit (for instance to a synchronous circuit, in particular a processing element) so that a corresponding clock tree may be temporarily pruned. Thus portions of the circuitry may be disabled so that its flip-flops may not change their states. Correspondingly, the switching power consumption may go to zero, and only leakage currents may be incurred. The clock gating may be a full or a partial one. The full clock gating may disable the whole processing elements, whereas the partial clock gating may disable only a portion or portions of the processing element. When compared to the switch-off, the full or partial clock gating may save less energy and exhibit a higher leakage. On the other hand the time to completely switch off/on the processing element may take a longer time than to disable/recover the processing element using the partial or the full clock gating. Also the full gating may save more power than the partial clock gating, but disabling/recovering the processing element using the full gating may be more time consuming than the partial clock gating. Therefore, it may be advantageous to use the partial clock gating for applying the short sleep mode, to use the full clock gating for applying median time sleep mode and/or to use the switch-off for applying the deep sleep mode.

According to an example embodiment of the invention the power management unit is further configured to implement one of the group consisting of retaining data for use in executing tasks by the one of the processing elements during the short sleep mode, retaining data for use in executing tasks by the one of the processing elements and stop components of the one of the processing elements, which components are not storing the data for use in executing tasks by the one of the processing elements during the median time sleep mode, and saving or erasing data being used by the one of the processing elements for executing tasks during the deep sleep mode.

As already mentioned above, the term "data" may particularly denote the data and/or instructions (i.e., program data). Hence retaining data may denote retaining data and/or instructions.

In accordance with the scheduling of the tasks (i.e., the assignation of the tasks) to the processing elements it may be important for the particular processing element to retain the data used by the processing element in executing of tasks. The processing element may need this data to be available, in case there might be a task or tasks assigned to it later that may need again this data. Saving data, erasing data and/or recovering data may be time and energy consuming. Also stopping components, starting components of the processing elements, switching on processing elements and/or switching off processing elements is time and energy consuming. This time and energy consumptions may have to be in a balance with the sleep time and energy savings in particular power saving modes. This balance may be achieved, for instance, by the above prescribed measures, this means by retaining data for use in executing tasks the processing element during the short sleep mode, retaining data for use in executing tasks by the processing elements and stopping components of the processing element, which are not storing the data for use in executing tasks by the processing element during the median time sleep mode, and saving or erasing data being used by the processing element for executing tasks during the deep sleep mode.

According to an example embodiment of the invention, the power management unit is configured apply to a processing element: the median time sleep mode during the initial stage, the short sleep mode during the intermediate stage, and the deep sleep mode during the final stage.

As already mentioned above, in the initial stage the number of ready tasks (i.e., task ready for execution) is increasing from 1 up to N, where N is equal to the number of processing elements. During this stage, some processing elements may be waiting for tasks to be available (i.e., ready for execution). The hardware task scheduler may decide based on the load balancing policy that a particular processing element may execute a particular task (i.e., the hardware task scheduler may assign the particular task to the particular processing element). Therefore, the power saving unit may apply the median time sleep mode to one or more processing elements waiting for tasks to be available (for instance for tasks being ready for execution and assigned to the respective processing element). As no task was loaded by these processing element, there may be no need to save data used for the execution of the task and/or the task context (for instance, a minimal set of data used by the task that must be saved to allow a task interruption at a given date, and a continuation of this task at the point it has been interrupted and at an arbitrary future date). Still, these processing elements may need to load their instructions caches in order to be able execute tasks being promoted to ready tasks (i.e., tasks ready for execution). The power management unit may wake up the corresponding processing element when a task is ready for execution, without requesting content restore in advance.

For instance, all the processing elements can initially be in a deep sleep. The power saving unit can wake them in advance, according to the task scheduler policy (for instance load balancing policy, data locality policy, etc.), so that they will be ready to execute tasks when they will receive tasks allocated by the task scheduler. Therefore, the time to go from deep sleep mode to the operational mode may be hidden.

During the intermediate stage more then N tasks are ready for execution and correspondingly all processing elements are deployed. In this stage, based on the readiness of tasks the power saving unit may apply a short sleep mode to a particular processing element, if possible. The power management unit may also use its knowledge of task dependencies for applying the short sleep to the particular processing element. For instance, a partial clock gating may be applied to the processing element. In particular, a short sleep mode may be triggered to the processing element, if it is waiting for a task running (i.e., being executed) on another processing element to be finished. The short sleep may also be triggered to the processing element, if it has a cache miss of more then, for instance, 30 cycles. In the short sleep mode, the data in registers (for instance, register files) and memories (for instance, local memories) used by the processing elements for the execution of tasks may be retained so that the processing element can restart within few cycles (for instance, 1 to 10 cycles). In this mode the power saving is minimal. On the other hand the time during which the processing element goes and/or recovers from the power saving is reduced.

During the final stage the number of tasks decreases from N tasks to one task. During this stage some processing element may possibly be waiting for a task to be ready for execution. For instance, the hardware task scheduler may decide based on the load balancing policy that a particular processing element may execute a particular task (i.e., the hardware task scheduler may assign the particular task to the particular processing element). However, since the number of possible tasks to be executed is less then the number of processing elements, the power management unit may disable one idle processing element at the time. An idle processing element may fulfil the following criteria, in order to be disabled: (i) no task is scheduled for this processing element and (ii) a tail submit rule does not apply anymore. Therefore, the power management unit may apply the deep time sleep mode, in which mode the disabled idle processing elements may not need to save their content or restoring it. This means that a power switching-offmay be applied to a particular processing element including the memories (for instance, local memories) and register files. The corresponding data saved in these memories and registers may be lost, if the processing element will not save them to an external memory before going to sleep. Therefore, the processing element may store the data used for the execution of tasks when it will have to use later. The processing element may restore the saved data later during a wake up from the deep sleep. Since the saving and restoring data costs time and energy, the deep sleeping time of the processing may need to longer than the time needed to save and restore the data. The deep sleeping time also should be long enough in order to cover the energy spent during the phase of storing and recovering the data.

The term "tail submit" rule may particularly denote a tail submit policy, improving the data locality policy. In addition to the data locality, which data locality prefers to assign the child task to the processing element which was executing its parent task and hence may already contain some data in the data cache required for execution of the child task, the tail submit policy may concern the case that several children tasks are ready for execution after the parent task has been executed. In such a case, one of the ready children tasks will be assigned to the same processing element as the parent task and the remaining ready children tasks will be assigned to a ready task floating first-in-first-out buffer. Any idle processing element may take a task from the floating ready task FIFO buffer.

When all parallel tasks are finished and only one task is left (i.e., the main task) the power management unit may send a signal to all idle processing elements in order to switch-off all processing elements. Normally in this stage, the memory content as well as the instruction memory may not be needed anymore as they may be needed to be replaced for a next application. Therefore, since no explicit save context may be required, by the full power-off also the internal memory content of the processing elements may be reset.

In particular, the task scheduler can assign tasks to processors in order to maximize the number of idle processors; in which case the idle processors, which will not receive tasks anymore, can be switched-off.

In order to do determine the stage of the execution of tasks and have the knowledge concerning the readiness of tasks at its disposal, the power management unit may be equipped with same read functionality as the control unit. This means that the power management unit may have access to the same information concerning the tasks being executed by individual processing elements, readiness of individual tasks, in particular respective destination processing elements corresponding to particular tasks, and about the dependencies between tasks. In order to apply the most appropriate power saving mode to individual processing elements, the power management unit may be linked to master interfaces which are connected to local power controllers of the respective processing elements.

The control unit of the task scheduler may also have access to information concerning the power consumption each of the processing elements in the various power saving modes (this access might be a direct one or an indirect one through the power management unit). Therefore, the control unit may influence its scheduling policy and, if two or more processing elements are ready to be allocated for a task, the one which will imply the lowest power consumption of the complete plurality of the processing elements (active, or idle) may be selected.

According to an example embodiment of the invention, the power management unit is implemented exclusively in hardware.

Hence, to the use of the power management unit as described, the power saving may be fully decoupled from software, fully dynamic and fully hardware based.

The hardware task scheduler may further comprise a synchronization buffer for storing information characterizing the last finished tasks.

The power management may further be configured to have an access to the synchronization buffer and to an initialization register of the control unit.

The power management unit may further be configured to keep statistics concerning a running task.

The power management unit may further be configured to receive a copy of each task, which is ready to be executed and the information about its assignment to a particular processing element.

The power management unit may further be configured to determine the stage of the execution of tasks based on the information stored in the synchronization buffer, information in the initialization register of the control unit, the statistics concerning the running task and/or the copy of each task, which task is ready to be executed and the information about the assignment of this task to a particular processing element.

The power arrangement unit may further be configured to apply the power saving mode to a processing element based on the information stored in the synchronization buffer, information in the initialization register of the control unit, the statistics concerning the running task and/or the copy of each task, which task is ready to be executed and the information about the assignment of this task to a particular processing element.

Next, further example embodiments of the multiprocessing system will be explained. However, these embodiments also apply to the hardware task scheduler and the hardware-based power saving method.

According to an example embodiment of the invention, the multiprocessing system is adapted as a monolithic integrated circuit (for instance, a single integrated circuit die or onto multiple dies in a single chip package). This means that the hardware task scheduler and the processing elements may be monolithically integrated as a system on a chip (SoC). The system may comprise more than one hardware task schedulers, in which case, all of them may be integrated in the same (SoC). If the processing elements share a level 2 cache memory this memory may also be integrated on the common SoC (for instance, on-die). If the number of processing elements is large (for instance ten or more) the interconnect of the multiprocessing system may be implemented by a network on chip. The SoC may be connected to an external off-chip double-data-rate synchronous dynamic random access memory (DDR SDRAM). Any process technologies like CMOS, BIPOLAR, BICMOS may be implemented in course of the monolithic integration. Micro- and nano-technologies like lithography, etch or deposition techniques may be implemented in course of the monolithic integration.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates a system on a chip (SoC) comprising a hardware task scheduler according to an example embodiment of the invention.
Fig. 2 illustrates a hardware task scheduler comprising a power management unit according to an example embodiment of the invention.
Fig. 3 illustrates three different stages of execution of tasks according to an example embodiment of the invention.
Fig. 4 illustrates a repetitive dependency pattern and a corresponding dependency graph according to an example embodiment of the invention.

### DESCRIPTION OF EMBODIMENTS

The illustration in the drawing is schematical.

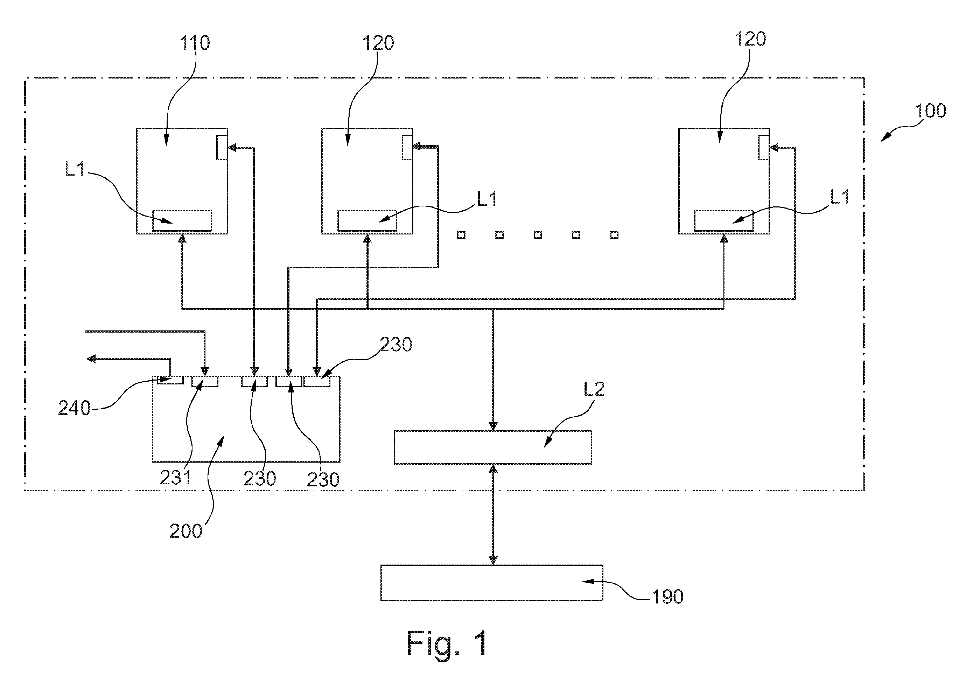

**Fig. 1** illustrates a system on a chip (SoC), i.e., a monolithic integrated circuit, comprising a hardware task scheduler according to an example embodiment of the invention. The SoC will be described for simplicity as comprising a homogeneous plurality of processing elements, particularly a plurality of processor cores. However, the SoC may also comprise homogeneous plurality coprocessors. Further, the SoC may also comprise a heterogeneous plurality of processing elements. For instance, the SoC may comprise both processor cores and coprocessors. Furthermore, although the SoC will be described for simplicity with respect to single-threaded processing elements, multi-threaded processing elements may be employed as well.

The SoC 100 comprises a plurality of processor cores 110, 120. The plurality of processor cores includes a master core 110 and a number of slave cores 120. Each of the processor cores 110, 120 comprises a local level 1 cache memory L1. The SoC 100 also comprises a shared (for instance, on-die) level 2 cache memory L2 and a hardware task scheduler 200. The shared level 2 cache memory L2 connects to each of the local level 1 memories L1. The hardware task scheduler 200 is directly connected to each of the processor cores 110, 120 in the SoC 100. Particularly, the hardware task scheduler 200 comprises a plurality of master/slave ports 230 connecting to the master core 110 or to the slave cores 120. The hardware task scheduler 200 may also be employed in a large scale system comprising further (one or more) hardware task schedulers, in which case the hardware task scheduler 200 may comprise a master port 240, which may be used for connection to the further hardware task schedulers (not shown). The hardware task scheduler 200 may be connected to the further hardware tasks schedulers also using a slave port 231.

The main purpose of the hardware task scheduler is in accelerating task management in hardware. First, the master core 110 configures (initializes) the hardware task scheduler 200 with a regular dependency pattern between tasks (for simplicity, dependency pattern in the sequel) such as a repetitive dependency pattern, a wrapper dependency function (for instance, a kernel's function pointer) and loop boundaries (i.e., information concerning boundaries of a graph corresponding to the dependency pattern) sufficient to create a task dependency graph (for simplicity, graph in the sequel). The wrapper function is a special hardware task scheduler function, which requests available tasks from the hardware task scheduler 200 and starts an applied function with arguments obtained from the hardware task scheduler 200. Then, the hardware task scheduler 200 prepares tasks available (i.e., ready) for execution on the master core 110 and slave cores 120, while gradually building the graph. The master core 110 and slave cores 120 continuously ask for new tasks and inform the hardware task scheduler 200 when tasks finish. Finally, the hardware task scheduler 200 signals to all processor cores 110, 120 (i.e. to the master core and the slave cores) when the task graph is executed. Put in other words, the master core 110 configures the hardware task scheduler 200 with a dependency pattern and loop boundaries, whereas slave cores 120 pull tasks from the hardware task scheduler 200. It may happen that at some point the number of tasks exceeds the number of available processor cores 110, 120 (i.e. including the master core and the slave cores) so that one processor core 110, 120 may execute several tasks sequentially. Both the master core 110 as well as the slave cores 120 interact with the hardware task scheduler 200 via an application programming interface (API) including configuration functions, get task function and release task function. These functions may be implemented on top of a memory mapped input/output (MMIO) read and write transactions and therefore, they may require no extension of the instruction set of the processors 110 and 120 and compiler modifications.

In a large scale system with several hardware task schedulers, each hardware task scheduler can steal tasks, using his master port, from any of the further hardware task schedulers. For instance, the hardware task scheduler 200 can steal tasks from any of the further hardware task schedulers using the master port 240. Conversely the further hardware tasks schedulers can steal tasks from the hardware task scheduler 200 via the slave port 231 of the hardware task scheduler 200. The stealing of tasks may be initiated if the processing elements linked to a hardware task scheduler are idle and the hardware task scheduler does not have local tasks available.

The hardware task scheduler 200 is connected to an external off-chip double-data-rate synchronous dynamic random access memory (DDR SDRAM) 190.

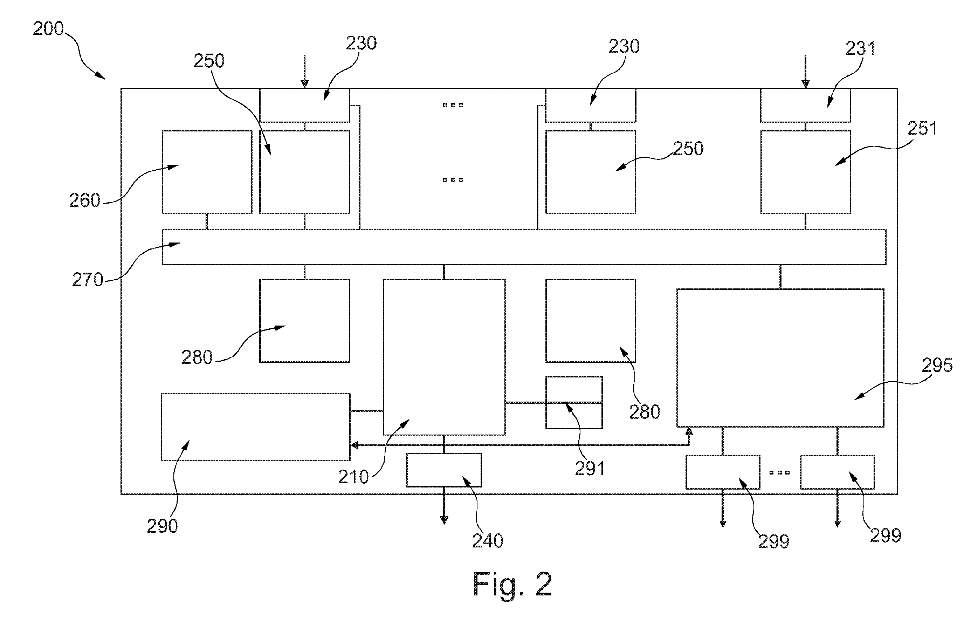

**Fig. 2** illustrates a hardware task scheduler comprising a power management unit according to an example embodiment of the invention. The hardware task scheduler will be described for simplicity as being configured to couple to a homogeneous plurality of processing elements, particularly to a plurality of processor cores. However, the hardware task scheduler may also be configured to couple to a homogeneous plurality coprocessors. Further, the hardware task scheduler may also be configured to couple to heterogeneous plurality of processing elements. For instance, the hardware task scheduler may be configured to couple to both processor cores and coprocessors.

The hardware task scheduler 200 comprises a control unit 210 which takes an overall control of the operation of the hardware task scheduler 200. The hardware task scheduler 200 further comprises a master port 240 and a plurality of master/slave ports 230. The number of master/slave ports 230 can be arbitrary. The master port 240 may serve for an optional connection to one or more external hardware task schedulers (not shown). The master/slave ports 230 serve for connecting the hardware task scheduler 200 to slave cores (not shown) or a master core (not shown). The slave port 231 may serve for an optional connection to the further external hardware task schedulers. The optional connections to the further external hardware task schedulers may be used in the case when the hardware task scheduler 200 is employed in large scale system as described above in relation to Fig. 1. The hardware task scheduler 200 also comprises a plurality of slave ready task FIFO (First-In-First-Out) buffers 250 and 251. Each of the slave ready task FIFO buffers 250 is connected to one of master/slave ports 230. The slave ready task FIFO buffers 250 store tasks ready for execution, which tasks are assigned to processor cores via the respective master/slave ports 230. The slave ready task FIFO buffer 251 connects to the slave port 231 and may store task ready for execution available for stealing by an another hardware task scheduler. Each of the slave ready task FIFO buffers 250, 251 corresponds to a single hardware thread. However, in case of multi-threaded processor cores each of the slave ready task FIFO buffers 250, 251 may correspond to more hardware threads. In addition to the slave ready task FIFO buffers 250, 251, the hardware task scheduler 240 also comprises a floating slave ready task FIFO buffer 260, which stores tasks ready for execution but not assigned to the processing elements via any of the master/slave ports or for stealing by another hardware task scheduler via the slave port 231. The control unit 210, the master/ slave ports 230, the slave port 231, the slave ready task FIFO buffers 250, 251 and the floating ready task FIFO buffer 260 are all connected to a full cross-bar connection 270 serving for interconnecting all components of the hardware task scheduler 200, which are connected to the full cross-bar connection 270. For each master/slave port 230 there is one corresponding candidate buffer 280 connected to the full cross-bar connection 270. The candidate buffers 280 store task candidates (i.e., children tasks) of ongoing tasks for the master core 110 and the slave cores 120. Information characterizing last finished tasks (for instance, positions of task in the corresponding task graph) is stored in a synchronization buffer 290. Information concerning dependency pattern between tasks is stored in a repetitive dependency pattern buffer 291. Both the synchronization buffer 290 and the repetitive dependency pattern buffer 291 are connected to the control unit 210. The synchronization buffer 290 is also connected to a dynamic power management unit 295, which dynamic power management unit 295 is connected to the full cross-bar connection 270.

Next, a typical operation sequence of the hardware task scheduler 200 will be described first without making reference to the power management unit 295. The operation of the power management unit 295 will be explained later. First, the master core (not shown) executes a sequential part of an application and encounters in course of the execution a parallel segment programmed for the hardware task scheduler 200. Then, the master core activates the hardware task scheduler (for example, by a system call° and writes a dependency pattern and boundaries of a task graph to the hardware task scheduler 200. The control unit 210 stores the dependency pattern in the repetitive dependency pattern buffer 291 and submits a first task to one of the slave ready task FIFO buffers 250. In parallel, the control unit 210 computes all possible candidate tasks (i.e., children tasks of the first task) that could start executing once the first task is completed and stores them in a proper candidate buffer 280. In general, the calculation of the candidate tasks (i.e., is performed by negating, for instance, inverting) the dependency pattern. For example, if the graph is a two dimensional graph with vertices parameterized by pairs of integers (x,y) with the dependency (-1,+2), this dependency will generate a task candidate (x+1, y-2) in relation to an executed parent task (x,y). Typically, a task generates as many candidate tasks as there are dependencies in the pattern, however, tasks located on the boundaries of the task graph may generate less (including zero) candidate tasks. In a heterogeneous multi-threaded multi-core architecture, one candidate buffer 280 may contain multiple candidate task sets, each candidate tasks set belonging to a particular hardware thread executing the parent task. When the master/slave port 230 signals that the first task execution has been finished by the corresponding processor core, the control unit 210 tries to promote the candidate tasks from the corresponding candidate buffers 280 to the slave ready task FIFO buffers 250. The control unit 210 reads one candidate task per cycle and checks whether:
1. all parent tasks of the candidate task have been completed; and
2. at least duplicate of the candidate task was promoted.

In this respect, it has to be noted that candidate task duplicates may be generated for a task depending on several other tasks (i.e., parent tasks). The two above mentioned checks rely on task statuses captured in the synchronization buffer 290. A task can have one of three following statuses: "unprocessed", "pending" or "finished". In the beginning all tasks are "unprocessed". The status of a task changes to "pending" when the task is promoted to a slave ready task FIFO buffer 250. Finally, when a task completes, its status becomes "finished". The first check is satisfied, if statuses of all parent tasks of the candidate task are "finished". The second check is satisfied, if the candidate task's status is "unprocessed". If both checks are satisfied, the candidate task migrates to the corresponding slave ready task FIFO buffer 250 and updates its status in the synchronization buffer 290 to "pending". Otherwise, the control unit 210 drops the candidate task, because another unfinished parent task will promote this task in future or the candidate task was a duplicate. This process continues until all tasks are executed.

The hardware task scheduler 200 may implement scheduling policies supporting heterogeneous multi-core architectures, where each of the processor cores can be multi-threaded or single-threaded. In general, for scheduling (i.e., assigning) a task for a multi-core architecture an optimal load balancing as well as stimulating data locality among tasks may be used. However, the data locality and load balancing methods may suggest contradicting task scheduling options. For example, according to the data locality method a task may be assigned to run on a processor core where its predecessor task (i.e., the parent task) has been finished. However, if this processor core is overloaded (for instance, in case that the processing element is multi-threaded and/or virtualized, in which case other tasks may be assigned to virtual processing elements physically mapped to the processing element, in addition to task currently running on it), the load balancing method may recommend running the task on some another processor core. Therefore, a joint principle (i.e., scheduling policy) may be defined to choose the most beneficial method for each task scheduling. In heterogeneous architectures the joint principle may also be aware of performance implications of multithreading types (for instance, interleaved and blocked types). However, an interleaved multi-threaded processing element may run a single task slower than a single-threaded processing element. Therefore, under other equal conditions, if there is a choice between two processing element with different number of interleaved threads, the scheduling policy may favor the processing element with fewer interleaved threads.

During the execution of the tasks, the parallelism in the 2D task graph, which graph is being executed, can be spitted into three stages. During an initial stage, the number of active tasks is lower than the number of processing elements (for instance hardware threads, in case of multi-threaded processing elements). During an intermediate stage the number of active tasks is larger than the number of processing elements. During a final stage, the number of active tasks becomes again lower than the number of processing elements.

Since during the initial stage and the final stage the number of threads is higher then the number of available parallel task, the hardware task scheduler 200 assigns tasks to the processing elements taking into account the load balancing. In the stage two, the hardware task scheduler 200 can find enough parallelism to assign tasks to the processing elements based on data locality. The control unit 210 of the hardware task scheduler 200 keeps record of the number of ready tasks that are submitted the slave ready task FIFO buffers 250, 251. Based on this number the hardware task scheduler 200 can identify the current stage of execution of tasks as one of the three above mentioned stages. Correspondingly, the hardware task scheduler 200 can identify and which of the two scheduling policies (load balancing policy, data and/or locality policy) has to be applied.

The basic scheduling technique that is always applied by the hardware task scheduler 200 is tail submit technique. The tail submit technique always holds independently of the stage. When, for instance, a hardware thread requests a task, it reads, via its dedicated physical processor core and the corresponding master/slave port 230, its dedicated slave ready task FIFO buffer 250. If this slave ready task FIFO buffer 250 is empty then hardware thread requests from the control unit 210 to get an access to a ready task from the ready task floating FIFO buffer 260. If the execution progress is in the initial stage or the final stage, the control unit 210 will test the request of the hardware thread and the access to the ready task floating FIFO buffer 260 will be granted to the requesting hardware thread only if it belongs to the least loaded physical processor core. The Control unit 210 can identify the least loaded physical processor core by counting the number of tasks being executed on each physical processor core, which information is being stored in the candidate buffers 280.

As already mentioned, in the initial stage and the final stage the hardware task scheduler 200 focuses on the load balancing. A processor core with more running/assigned tasks and fewer interleaved threads has a higher load. If the processor cores subjected to the load balancing run no tasks, a processor core with fewer interleaved threads (in case of multi-threaded processing elements) will be selected. The hardware task scheduler 200 selects the least loaded processor core to schedule (i.e., assign) the new task to maximize parallel throughput of the application. In the intermediate stage all processing elements (for instance, hardware threads in case of multi-threaded processing elements) are busy, and it is more beneficial to ensure a code locality (i.e., assigning later to the same processing element a task which has the same code as the currently executed task) and the data and/or program locality. The data locality policy favors scheduling a child task to the physical processor core of its parent task. Similarly to the basic tail submit principle, in case of a 2D graph, the hardware task scheduler 200 can map (i.e., assign) new tasks from the next row Y+1 of the task graph to the same physical processor core as the task from the row Y has been scheduled (i.e., assigned).

In order to improve the performance, the hardware task scheduler 200 supports also job stealing between multi-threaded processor cores - a hardware thread can take any newly assigned task to the same physical processor core without any limitation. However, the condition for job stealing from another physical processor core is that this another processor core has more then two tasks assigned to its queue and there is no ready task in the floating ready task FIFO buffer 260.

In general, a traditional hardware task scheduler can either assign a ready task to one of the processor cores by pushing a ready task to the processor core's dedicated task ready FIFO buffer or by assigning the ready task to the floating FIFO buffer, where the processor core can pull the ready task from.

Pushing technique is hardware friendly technique where the task dispatching can be managed by a centralized control unit. On the other hand it has the disadvantage of limiting the task reassignment or rescheduling where the system can suffer of inefficient load balancing.

Pulling technique provides the lowest scheduling overhead, since a ready task is assigned to the first requesting processor core. However, the data locality can not be granted and as consequence the memory read bandwidth becomes higher. Furthermore the pulling technique is less hardware friendly than pushing technique since the control unit needs to distribute over the number of processor cores.

In order to guarantee a lowest scheduling overhead and most hardware friendly scheduler, a hydride version of the two dispatching methods is implemented where both pushing and pulling techniques are used. The control unit 210 pushes the ready task according to the tail submit rule to task ready FIFO buffer 250 corresponding (i.e., dedicated) to the respective processor core. All other ready tasks are pushed to the floating task FIFO buffer 260. Processor cores (or hardware threads) pull tasks from the dedicated task ready FIFO buffers 250. If there is no task to get task ready FIFO buffers 250, the hardware task scheduler 200 forwards the incoming request to the floating task FIFO buffer 260.

The power management unit 295 has a direct access to the synchronization buffer 290 and an access through the full cross-bar 270 to initialization registers of the control unit 210. Furthermore, the power management 295 unit keeps a statistics of the running kernel task (i.e., the processes used for the communication between the hardware and the software) and retrieves a copy of each newly created task and information about its destination. Based on this the power management unit 295 computes in which of the three stages the application is running and performs a corresponding power saving technique, i.e., applies a corresponding power saving mode on the processor cores. To this end, master interfaces 299 are linked to the power management unit 295, which master interfaces 299 are connected to respective local power controllers of processor cores.

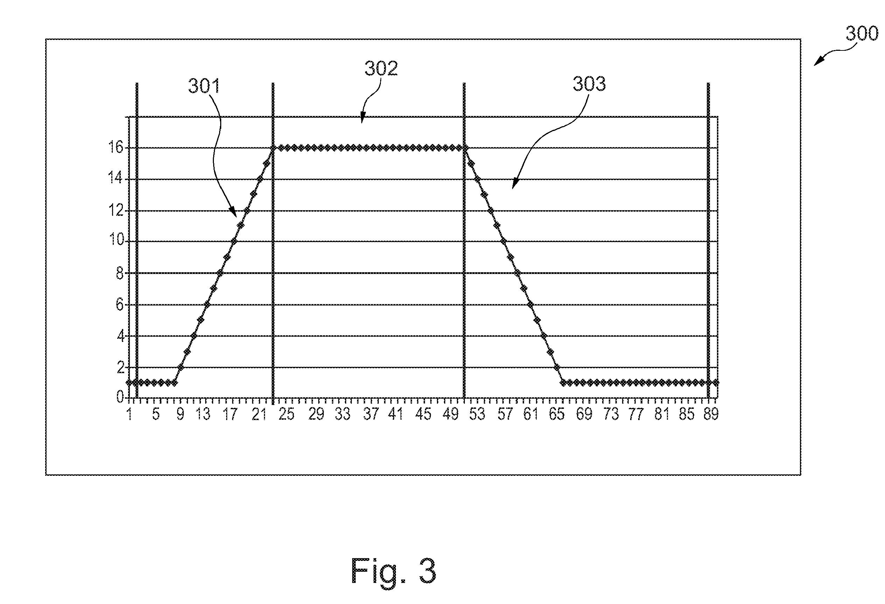

**Fig. 3** illustrates three different stages of execution of tasks according to an example embodiment of the invention. The application comprising the execution of tasks can be, for instance, a video processing algorithm implemented on multi-core processor or a multi-coprocessor. The stages one to three are characterized by a curve 300 representing the number of processor cores deployed in course of the executing that means the number of deployed cores (axis y) versus the number of tasks which have already been executed (axis x). The three stages illustrated in Fig. 3 correspond to the three stages (initial stage, intermediate stage and final stage) shortly described in relation with Fig. 2. Here they will be, for simplicity, described in a single-threaded context.

In the initial stage 301 the number of active tasks is increasing from 1 up to N, where N is equal to the number of processor cores (N=16 in Fig. 3). During this stage, some processor cores may be waiting for tasks to be available (i.e., ready for execution). The hardware task scheduler may decide based on the load balancing policy or on the estimated power consumption of each processing element that a particular processor core may execute a particular task (i.e., the hardware task scheduler may assign the particular task to the particular processor core). Therefore, the power saving unit may apply the median time sleep mode to one or more processor cores waiting for tasks to be available (for instance, for tasks being ready for execution and assigned to the respective processor cores). As no task was loaded by these processing elements, there may be no need to save data used for the execution of the task and/or the task context (for instance, a minimal set of data used by the task that must be saved to allow a task interruption at a given date, and a continuation of this task at the point it has been interrupted and at an arbitrary future date). Still, these processor cores may need to load their instructions caches in order to be able execute tasks being promoted to ready tasks (i.e., tasks ready for execution). The power management unit may wake up the corresponding processor core when a task is ready for execution, without requesting content restore in advance. The power management unit, in collaboration with the task scheduler, can also wake-up in advance a processing element in the deep sleep mode, so that the processing element will be ready for executing a task when the task scheduler will assign the task to it, or when the number of tasks will be large enough so that this processing element might be needed to be used for executing tasks.

During the intermediate stage 302 more then N tasks are ready for execution and correspondingly all processor cores are deployed. In this stage, based on the readiness of tasks the power saving unit may apply a short sleep mode to a particular processor core, if possible. The power management unit may also use its knowledge of task dependencies for applying the short sleep to the particular processor core. For instance, a partial clock gating may be applied to the processor core. In particular, a short sleep mode may be triggered to the processor core, if it is waiting for a task running (i.e., being executed) on another processor core to be finished. The short sleep may also be triggered to the processor core, if it has a cache miss of more then, for instance, 30 cycles. In the short sleep mode, the data in registers (for instance, register files) and memories (for instance, local memories) used by the processor core for the execution of tasks may be retained so that the processor core can restart within few cycles (for instance, 1 to 10 cycles). In this mode the power saving is minimal. On the other hand the time during which the processor core goes and/or recovers from the power saving is reduced.

During the final stage 303 the number of tasks decreases form N tasks to one task. During this stage some processor cores may possibly be waiting for a task to be ready for execution. For instance, the hardware task scheduler may decide based on the load balancing policy that a particular processor core may execute a particular task (i.e., the hardware task scheduler may assign the particular task to the particular processor core). However, since the number of possible tasks to be executed is less then the number of processor cores, the power management unit may disable one idle processor core at the time. An idle processor core may fulfil the following criteria, in order to be disabled: (i) no task is scheduled for this processor core and (ii) a tail submit rule does not apply anymore. Therefore, the power management unit may apply the deep sleep mode, in which mode the disabled idle processor cores may not need to save their content or restoring it. This means that a power switching-offmay be applied to a particular processor core including the memories (for instance, local memories) and register files.

In general, during deep sleep mode, the data saved in memories and registers may be lost, if the processor core will not save them to an external memory before going to sleep. Therefore, the processor core may store the data used for the execution of tasks when it will have to use later. The processor core may restore the saved data later during a wake up from the deep sleep. Since the saving and restoring data costs time and energy, the deep sleeping time of the processing may need to last longer than the time needed to save and restore the data. The deep sleeping time also should be long enough in order to cover the energy spent during the phase of storing and recovering the data.

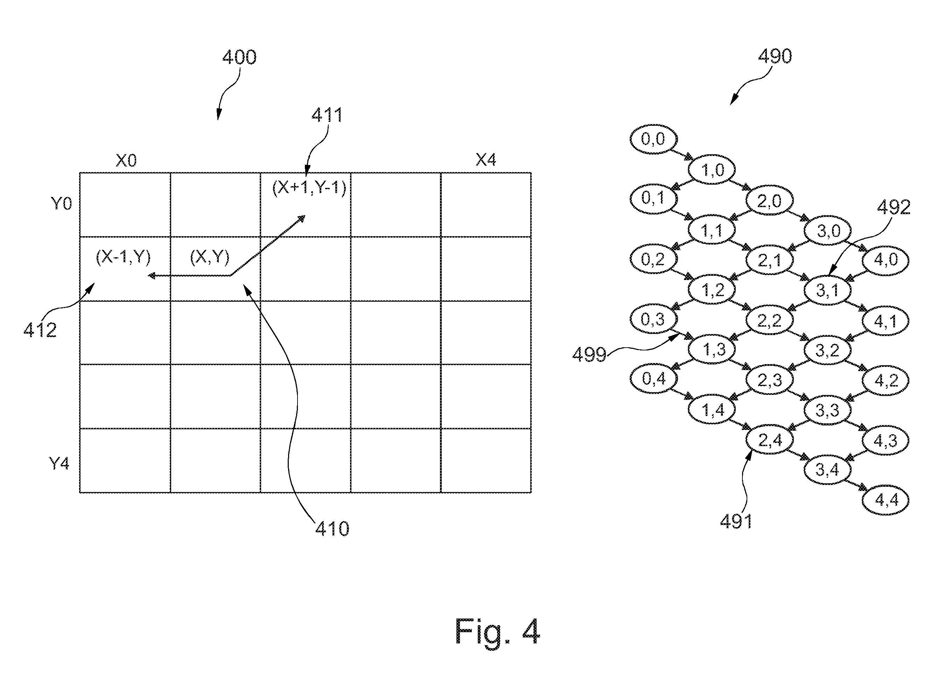

**Fig. 4** illustrates a repetitive dependency pattern (dependency pattern) and a corresponding dependency graph (graph) according to an example embodiment of the invention. Such a dependency pattern may be used for a video application, for instance, the H.264 video decoding parallelized at a macroblock level. In case of the H.264 video decoding the dependency pattern on the macroblock level is sufficient to build the graph for a complete video frame. Here the tasks correspond to decoding of individual macroblocks. The macroblocks are represented on a square grid 400 of a 5x5 macroblocks video frame by their respective coordinates (X0, Y0), ..., (X4, Y4). In particular, Fig. 4 shows two dependencies 411 and 412 (i.e., the two parent tasks corresponding to the decoding of the respective macroblocks 411 and 412) of one macroblock 410 (i.e., of the parent task corresponding to the decoding of the macroblock 410). These two dependencies are indicated by two arrows pointing from the macroblock 410 to the macroblocks 411 and 412. Correspondingly, two children tasks of the macroblock 410 are obtained by negating these two arrows, i.e. the macroblock with coordinates (X-1, Y+1) and (X+1, Y). These dependencies repeat for all macroblocks (with obvious exception of macroblocks positioned on boundaries on the grid 400, hence representing an example of a repetitive dependency pattern.

A 2-dimesional graph 490 corresponding to the above described dependency pattern comprises nodes such as boundary nodes 491 and inner nodes 492. The nodes correspond to tasks representing decoding of macroblocks identified with their respective coordinates (X, Y). Arrows 499 (pointing from the parents tasks to their respective children tasks) represent the dependencies between the tasks. In contrast to irregular task graphs, which are difficult to capture in hardware, the repetitive nature of the dependencies like the ones illustrated in Fig.4 prompts for hardware acceleration of the task scheduling overhead.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A hardware task scheduler (200) for scheduling processing resources of a plurality of processing elements (110, 120), the processing elements (110, 120) being adapted to execute tasks with a regular dependency pattern, the hardware task scheduler (200) comprising:
a control unit (210) being configured to assign the tasks, based on their readiness for execution, to the processing elements (110, 120) in accordance with the regular dependency pattern, and
a power management unit (295) configured to determine a stage of the execution of tasks and to apply a power saving mode to one of the processing elements (110, 210), the applied power saving mode being based on the stage of the execution of tasks and on the readiness of tasks for the execution.

2. The hardware task scheduler (200) according to claim 1, wherein the power management unit (295) is adapted to determine the stage of execution of tasks based on a number of tasks being ready for execution and based on the number of processing elements (110, 120).

3. The hardware task scheduler (200) according to claim 1, wherein the stage of the execution of tasks comprises one of the group consisting of
an initial stage (301), in which the number of tasks ready for execution increases from one to a number which is equal to the number of processing elements (110, 120),
an intermediate stage (302), in which the number of tasks ready for execution exceeds the number which is equal to the number of processing elements (110, 120), and
a final stage (303), in which the number of tasks ready for execution decreases from the number which is equal to the number of processing elements (110, 120) to one.

4. The hardware task scheduler (200) according to claim 1, wherein the control unit (210) is further configured to assign tasks to the processing elements (110, 120), based on one of the group consisting of a load balancing and a data locality.

5. The hardware task scheduler (200) according to claims 3 and 4, wherein the control unit (210) is further configured to perform one of the group consisting of assigning tasks to the processing elements (110, 120) based on the load balancing during the initial stage (301) and the final stage (303), and assigning tasks to the processing elements (110, 120) based on the data locality during the intermediate stage (302).

6. The hardware task scheduler (200) according to claim 1, wherein the power saving mode comprises one of the group consisting of
a short sleep mode comprising a partial clock gating of the one of the processing elements (110, 120),
a median time sleep mode comprising a full clock gating of the one of the processing elements (110, 120), and
a deep sleep mode comprising switching-offthe one of the processing elements (110, 120).

7. The hardware task scheduler (200) according to claim 6, wherein the power management unit (295) is further configured to implement one of the group consisting of
retaining data for use in executing tasks by the one of the processing elements (110, 120) during the short sleep mode,
retaining data for use in executing tasks by the one of the processing elements (110, 120) and stop components of the one of the processing elements (110, 120), which components are not storing the data for use in executing tasks by the one of the processing elements (110, 120) during the median time sleep mode, and
saving or erasing data being used by the one of the processing elements (110, 120) for executing tasks during the deep sleep mode.

8. The hardware task scheduler (200) according to claims 3 and 6, wherein the power management unit (295) is configured apply to the one of the processing elements (110, 120):
the median time sleep mode during the initial stage (301),
the short sleep mode during the intermediate stage (302), and
the deep sleep mode during the final stage (303).

9. The hardware task scheduler according to claim 1, wherein the power management unit (295) is implemented exclusively in hardware.

10. A multiprocessing system (100) comprising:
a plurality of processing elements (110, 120), the processing elements (110, 120) being adapted to execute tasks with a regular dependency pattern, and
a hardware task scheduler (200) according to claim 1 coupled to the plurality of processing elements (110, 120).

11. The multiprocessing system (100) according to claim 10, wherein the multiprocessing system is adapted as a monolithic integrated circuit.

12. A hardware-based power saving method for a plurality of processing elements (110, 120), the processing elements (110, 120) executing tasks with a regular dependency pattern, the tasks being assigned to the processing elements (110, 120) based on their readiness for execution and in accordance with the regular dependency pattern, the power saving method comprising:
determining a stage of the execution of tasks, and
applying a power saving mode to one of the processing elements (110), the applied power saving mode being based on the stage of the execution of tasks and on the readiness of tasks for the execution.
